# EUROPEAN PATENT APPLICATION

(11) **EP 2 017 041 A1**
(43) Date of publication of application: **21.01.2009**
(21) Application number: 07112776.5
(22) Date of filing: 19.07.2007
(51) Int. Cl.: B25F 3/00, B23B 31/107, B25B 21/00

(54) **Structure of power tool**

(71) Applicant: Chuang, Ching-Cheng, Sanmin District Kaohsiung City (TW)
(72) Inventor: Chuang, Ching-Cheng, Sanmin District Kaohsiung City (TW)
(74) Representative: Viering, Jentschura & Partner

(57) **Abstract**

A power tool includes a tool body and a coupler assembly including a coupler, an arrester, and a bit adapter. The power tool can selectively work with a screwdriver bit to serve as a power screwdriver. Or alternately, the coupler assembly is mounted to the tool body with an end of a shaft fit to an output spindle of the tool body to allow the bit adapter to be driven by the rotation of the output spindle. The bit adapter can selectively receive and hold drill bits of different specifications and diameters for performing different drilling operations. Thus, the power tool can be selectively functioning as a power screwdriver or a power hand drill.

## Description

### BACKGROUND OF THE INVENTION

### (a) Technical Field of the Invention

The present invention relates to a power tool, and in particular to a power tool that comprises an adaptor allowing for alternate change of operation bits for different jobs, such as a power screwdriver and a power hand drill.

### (b) Description of the Prior Art

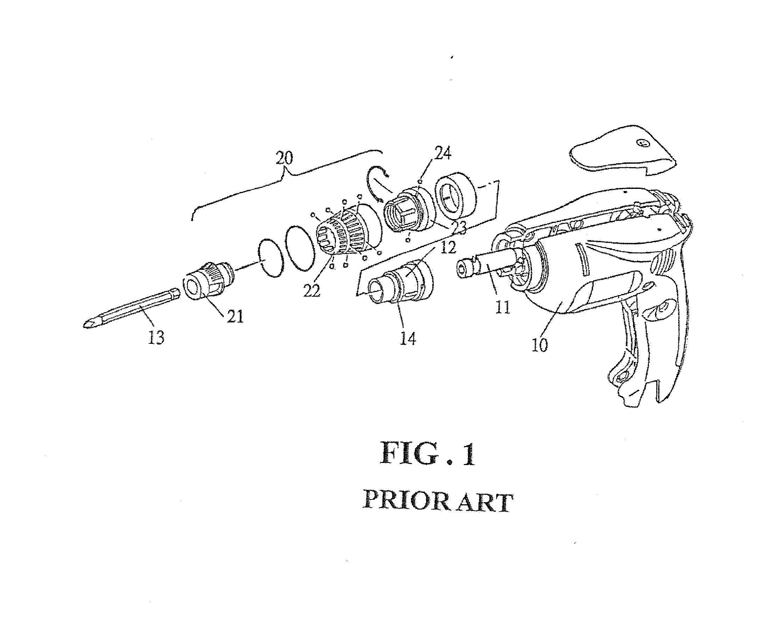

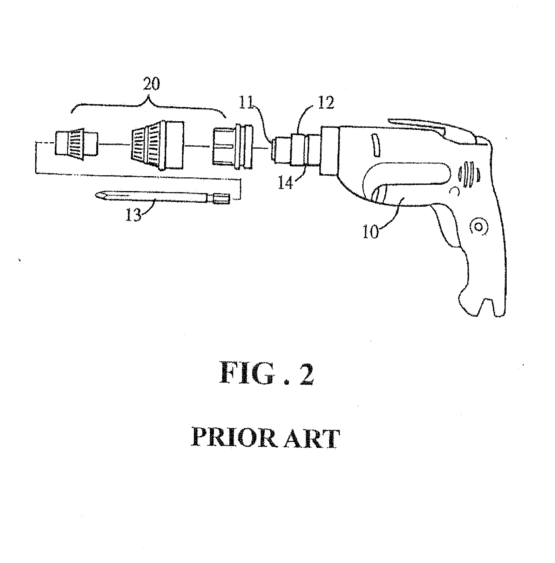

Power tools have widely used in various applications, among which hole drilling and screwing are the most common operations that are efficiently done with power tools. Figures 1 and 2 of the attached drawings show a conventional power screwdriver, which comprises a tool body 10 and a coupler set 20. The power screwdriver body 10 contains an electrical motor and associated parts/components therein and an output spindle 11 for effecting transmission of power from the motor is arranged at a front end of the body 10 and coupled with a coupling collar 12. The output spindle 11 has a front tip forming a hexagonal receptacle for receiving and driving as screwdriver bit 13. The coupling collar 12 has an outer surface around which a circumferential recess 14 is formed. The coupler set 20 comprises a first coupler member 21, a second coupler member 22, and a third coupler member 23. The first coupler member 21, the second coupler member 22, and the third coupler member 23 are assembled together in sequence. The third coupler member 23 has an inside circumference on which a plurality of beads 24 is mounted in a projecting manner so that when the coupler set 20 is fit over the coupling collar 12 at the front end of the body 10, the beads 24 on the inside of the third coupler member 23 are received into and engage with the recess 14 of the coupling collar 12 to complete the assembling of the coupler set 20 to the body 10. As such, when the motor is operated and drives the output spindle 11 to rotate, the screwdriver bit 13 that is mounted to the front tip of the output spindle 11 is rotated in unison therewith to effect screw tightening/loosening operation.

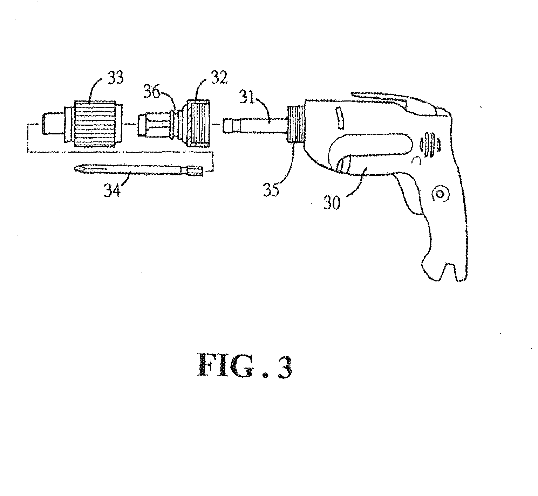

There is also another power screwdriver (see Figure 3) available in the market. The another power screwdriver comprises a screwdriver body 30 inside which an electrical motor and associated parts/components are contained, an output spindle 31 that is driven by the motor, and a threaded collar 32 and an adjustment collar 33 that are mounted to a front end of the body 30. The output spindle 30 has a front tip forming a hexagonal receptacle for receiving a corresponding screwdriver tip 34. The threaded collar 32 is threadingly coupled to a threaded projection 35 formed on the front end of the body 30. The threaded collar 32 forms a circumferential recess 36 around an outer surface thereof for receiving and engaging the adjustment collar 33. As such, when the motor is operated and drives the output spindle 31 to rotate, the screwdriver bit 34 that is mounted to the front tip of the output spindle 31 is rotated in unison therewith to effect screw tightening/loosening operation.

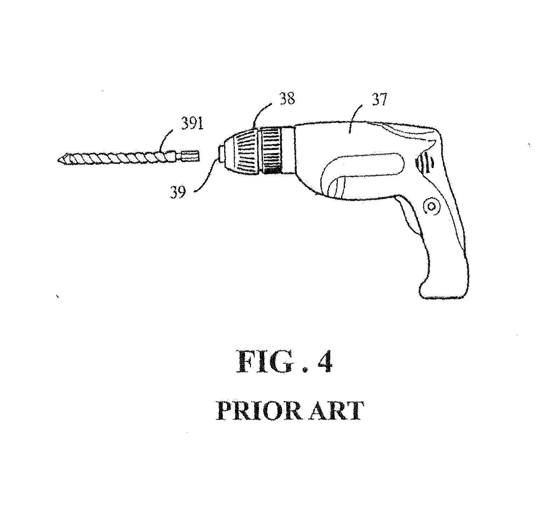

These known power screwdrivers have to operate with dedicated screwdriver tips 13, 34 to perform screwing operation and they demonstrate excellent performance of screwing operation. However, these known power tools are only adaptable for operation with the dedicated screwdriver bit 13 to do screwing; and there is no way that such a power tool can be used to carry out drilling operation. Thus, an additional drilling device is needed for hole drilling operation, such as the power hand drill illustrated in Figure 4. The power hand drill comprises a drill body 37 and a chuck 38. The drill body 37 comprises an electrical motor and associated parts/components accommodated therein and an output spindle 39 driven by the motor. The output spindle 39 forms a hexagonal receptacle to receive a corresponding drill bit 391. As such, when the motor is operated and drives the output spindle 39 to rotate, the drill bit 13 that is mounted to the front tip of the output spindle 39 is rotated in unison therewith to effect drilling operation.

These known power tools, including the power screwdriver and the power hand drill, are each dedicated for specific job. A user has to purchase various power tools and has to simultaneously carry more power tools in order to properly have his or her job done in site. This is not only inconvenient to the user, but also an economic burden for purchasing, maintenance and repairing. In addition, the screwdriver bit 13 and the drill bit 33 are dedicated for specific tools and have dedicated specification so that when these bits are worn out or broken, identical bits have to be purchased for replacement, otherwise the tool cannot be used again. This is troublesome for the users to purchase the bits.

Thus, the present invention is aimed to provide a power tool that overcomes the drawbacks of the conventional devices discussed above.

### SUMMARY OF THE INVENTION

The primary purpose of the present invention is to a coupler that serves to selectively and alternately couple a screwdriver bit and a drill bit to a power tool to allow the power tool to serve two functions.

Another objective of the present invention is to provide a power tool, which can serve as a hand drill that accept market-available dill bits having regular cylindrical shank to enhance selectivity of operation bits therefore. To achieve the above objectives, the present invention provides a power tool comprising a tool body and a coupler assembly comprising a coupler, an arrester, and a bit adapter. The power tool can selectively work with a screwdriver bit to serve as a power screwdriver. Or alternately, the coupler assembly is mounted to the tool body with an end of a shaft fit to an output spindle of the tool body to allow the bit adapter to be driven by the rotation of the output spindle. The bit adapter can selectively receive and hold drill bits of different specifications and diameters for performing different drilling operations. Thus, the power tool can be selectively functioning as a power screwdriver or a power hand drill.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Fig. 1 is an exploded view, in a perspective form, of a conventional power screwdriver;
Fig. 2 is also an exploded view of the conventional power screwdriver, but in a side elevational form;
Fig. 3 is an exploded view of another conventional power screwdriver;
Fig. 4 is a side elevational view of a conventional power hand drill;
Fig. 5 is an exploded view of a power tool constructed in accordance with the present invention;
Fig. 6 is a side-elevational view, partially broken, of the power tool of the present invention in an assembled form;

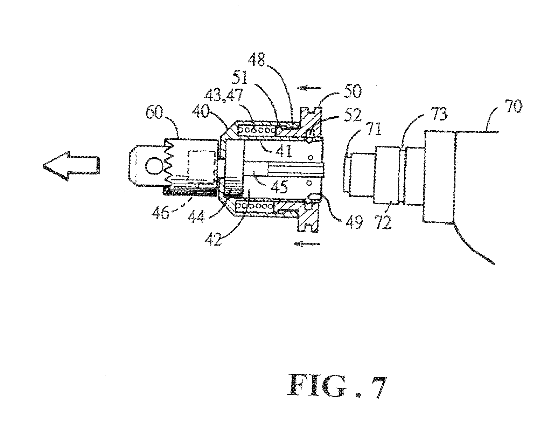

Fig. 7 is a side elevational view of a portion of the power tool of the present invention, illustrating detachment of a coupler from a body of the power tool;
Fig. 8 is a perspective view showing a threaded collar for the power tool of the present invention; and
Fig. 9 is a side elevational view, partially broken, illustrating mounting the threaded collar to the body of the power tool of the present invention.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

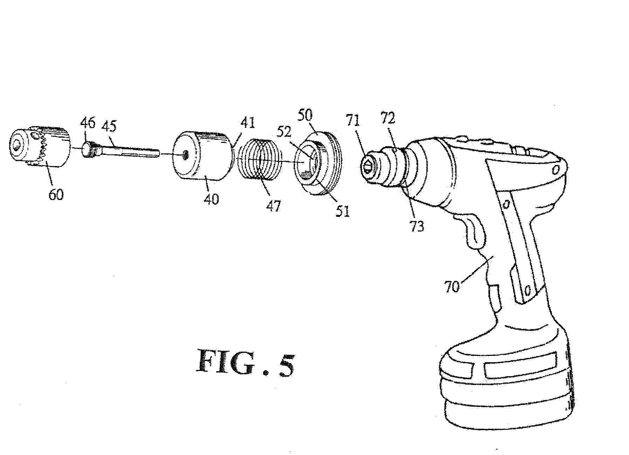

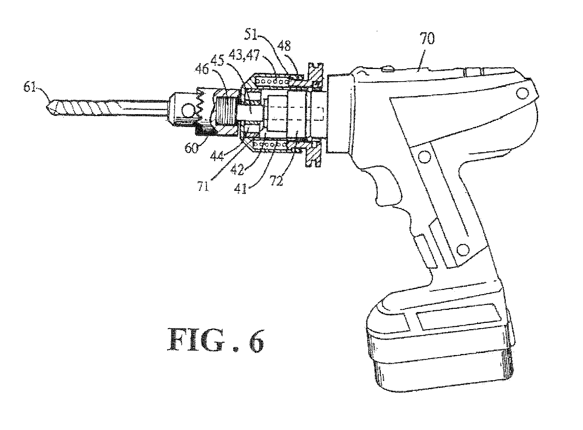

With reference to the drawings, and in particular to Figures 5 and 6, a power tool constructed in accordance with the present invention comprises a tool body 70, and a coupler assembly comprising a coupler 40, an arrestor 50, and a bit adapter 60. The tool body contains an electrical motor and associated parts/components (both not shown) for generation and transmission of torque/rotation. The motor has an output spindle 71 driven thereby for rotation and transmission of power/torque. The output spindle 71 has a front tip in which a hexagonal receptacle (not labeled) is defined for receiving and drivingly engaging a shank or a bar of a complementary shape therein. A coupling collar 72 is mounted to a front end of the tool body 70. The coupling collar 72 has an outer surface forming a circumferential recess 73.

The coupler 40, being a cylindrical body having an interior space delimited by an outer wall, forms an inner wall 41 that partitions the interior space into a hollow chamber 42 and a spring accommodation ring space 43 that is between the inner and outer walls. The hollow chamber 42 receives and fixes a bearing 44 therein an bearing 44 in turn supports a shaft 45 extending therethrough with a front end of the shaft 45 projecting beyond the coupler 40 and forming a joint section 46. An opposite, rear end of the shaft 45 is made hexagonal. The ring space 43 receives a compression spring 47 therein. The coupler 40 forms an inward circumferential projection 48 at an inside surface of the outer wall thereof at a rear end edge thereof. A plurality of balls 49 is circumferentially distributed and movably mounted in the inner wall 41 at a location close to a rear end edge thereof.

The arrester 50 is a circumferentially-stepped cylinder having a reduced front section around which an outward flange 51 is formed. A circumferential recess 52 is formed in an inside surface of a rear section of the arrester 50 at a location close to a rear end thereof. The front section of the arrester 50 is fit into the ring space 43 of the coupler 40 with the flange 51 engaging and retained by the projection 48 of the coupler 40. The compression spring 47 arranged in the ring space 43 biases the arrester 50 outward, in a direction away from the coupler.

The adapter 60 comprises a chuck that is commonly used in the conventional hand drill to fix a shank of a drill bit 61, and that is capable to fix drill bits 61 having a cylindrical shank of different specifications by manual operation of a bevel-gear based tightening/loosening tool. This is well known and will not be further described. The adapter 60 is connectable to a joint section 46 of the shaft 45 of the coupler 40 and is rotatable in unison with the shaft 45.

The tool body 70 is of a similar structure with the conventional hand power tool, and can work with a screwdriver bit (by fitting a hexagonal shank of the screwdriver bit into the hexagonal receptacle formed at the front tip of the output spindle 71) to carry out screwing operation. The tool can also be used to carry out drilling operation and this is done by mounting the coupler 40, the arrester 50, and the bit adapter 60 to the front end of the tool body 70. The front section of the arrester 50 is set into the ring space 43 of the coupler 40 with the flange 51 thereof engaging the projection 48 of the coupler40. This retains the arrester 50 in the ring space 43. The resiliency of the compression spring 47 inside the ring space 43 allows the arrester 50 to be forcibly moved inward (against the spring) to align the recess 52 with the balls 49 mounted on the inner wall 41 of the coupler 40. In this way, by the alignment of the recess 52 wit the balls 49, the recess 52 serves as an escape space for the balls 49, thereby inducing expansion of inside diameter of the inner wall 41. The balls 49, under the diameter expanded condition, allow the coupling collar 72 of the tool body 70 to pass. Once the arrester 50 is released and is moved away from the alignment between the recess 52 and the balls 49 by the spring 47, the balls 49 are subjected to an inward driving force applied thereto by an inside surface of the arrester 50 to return to an original inside diameter and the balls 49 are forced into and engage with the recess 73 of the coupling collar 72.

In this way, when the arrester 50 is forcibly depressed, the balls 49 are provided with an escape space to allow them to move outward for diameter expansion. This allows the coupler assembly to be detached from the coupling collar 72 of the tool body 70 and a replacement coupler assembly can be re-mounted to the tool body 70. When the replacement coupler assembly is mounted to the coupling collar 72 of the tool body 70, the hexagonal end of the shaft 45 of the coupler 40 is fit in the hexagonal receptacle in the front tip of the output spindle 71 so that when the output spindle 71 is driven by the motor, the bit adapter 60 mounted to the front end of the shaft 45 is also driven, whereby the drill bit 61 fixed to the bit adapter 60 can carry out drilling operation. The bit adapter 60 can selectively hold drill bits 61 of different specifications to perform different drilling operations on workpieces. Thus, the power tool of the present invention can also be used as a hand drill to selectively work with drill bits of different specifications that are readily available in the market. This apparently enhances the selectivity of drill bits or consuming parts.

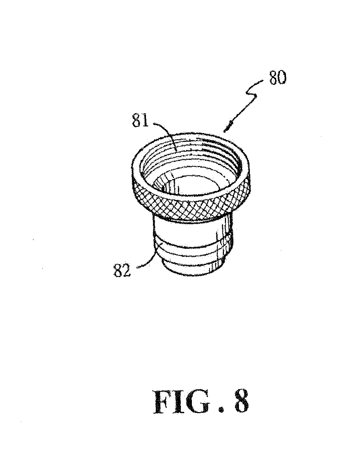

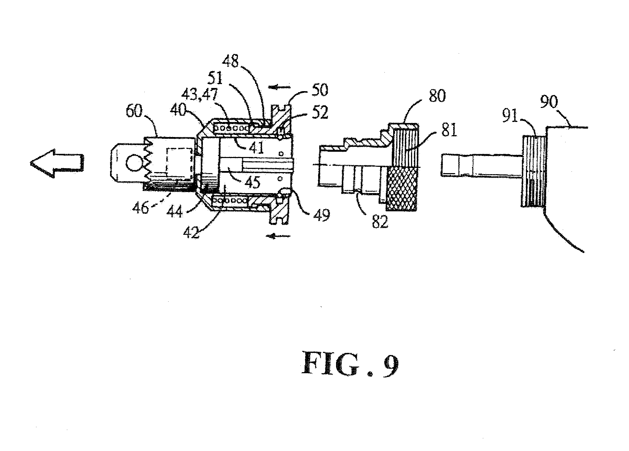

Further, referring to Figures 8 and 9, a threaded collar 80 is selectively added. The threaded collar 80 has a bore which forms an internal thread 81 at an end thereof for engaging and fixing to a threaded portion 91 of another power tool 90. The collar 80 has an outer surface in which a circumferential recess 82 is formed for selectively receiving and engaging the balls 49 of the inner wall 41 of the coupler 40. This provides an alternate solution to the present invention for coupling the coupler assembly to a regular power tool. Due to the threaded collar 80, the present invention can be embodied in a power tool having the threaded portion 91.

From the above description of the preferred embodiment, as well as the illustration of the drawings, of the present invention, it is apparent that the invention disclosed herein does realize the function and objectivities discussed above, whereby the present invention provides a power tool that can be used as a power screwdriver, and also functions as a power hand drill. In addition, the drill bit working with the power hand drill of the present invention can be of a dedicated hexagonal end or a regular cylindrical shank. This enhances the selectivity of the consuming parts/drill bit. Further, the shaft 45 of the coupler 40 that is driven by the output spindle 71 is supported at one end by the output spindle 71, and at an opposite end by the bearing 44, so that the drill bit 61 can be readily assembled with smooth rotation operation and no eccentricity may be found.

Although the present invention has been described with reference to the preferred embodiment thereof, it is apparent to those skilled in the art that a variety of modifications and changes may be made without departing from the scope of the present invention which is intended to be defined by the appended claims.

It will be understood that each of the elements described above, or two or more together any also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A power tool comprising a tool body and a coupler assembly comprising a coupler, an arrester, and a bit adapter, the body containing therein an electrical motor and associated parts/components to effect generation and transmission of torque/rotation, and an output spindle selectively driven by the motor and a coupling collar mounted to a front end of the tool body, the output spindle having a front end in which a receptacle is defined for receiving and drivingly engaging a bit shank of complementary shape, the coupling collar having an outer surface forming a circumferential recess, the coupler having an interior space which is delimited by an outer wall and in which an inner wall is formed to divide the interior space into a hollow chamber and a ring space that is between the outer and inner walls, the hollow chamber receding and fixing a bearing that in turn receives extension of a shaft, the shaft having a front end projecting beyond the coupler and forming a joint section and an opposite, rear end that is hexagonal, the ring space receiving a compression spring, the coupler forming an inward projection on an inside surface of the outer wall close to a rear end thereof, a plurality of balls being movably mounted in the inner wall.
